# EUROPEAN PATENT SPECIFICATION

(11) **EP 2 770 698 B1**
(45) Date of publication and mention of the grant of the patent: **07.11.2018**
(21) Application number: 13813645.2
(22) Date of filing: 05.09.2013
(51) Int. Cl.: H04L 29/08, H04L 12/18

(54) **SHARED PRESENTATION METHOD AND SYSTEM THEREOF**
GEMEINSAMES PRÄSENTATIONSVERFAHREN UND SYSTEM DAFÜR
PROCÉDÉ ET SYSTÈME DE PRÉSENTATION PARTAGÉE

(30) Priority: 05.07.2012 CN 201210232573
(43) Date of publication of application: 27.08.2014
(73) Proprietor: Zhuhai Kingsoft Office Software Co., Ltd, Zhuhai, Guangdong 519015 (CN); Beijing Kingsoft Office Software, Inc., Haidian District Beijing 100085 (CN)
(72) Inventor: ZHANG, Qingyuan, Zhuhai Guangdong 519015 (CN); WANG, Hui, Zhuhai Guangdong 519015 (CN); WANG, Junming, Zhuhai Guangdong 519015 (CN)
(74) Representative: Pfenning, Meinig & Partner mbB
(86) International application number: PCT/CN2013/083005
(87) International publication number: WO 2014/005559

(56) References cited:
- WO-A1-00/00912
- CN-A- 1 609 784
- CN-A- 1 650 278
- CN-A- 101 834 905
- CN-A- 102 739 801
- US-A1- 2006 026 502
- US-B1- 7 353 252

## Description

This application claims priority of the Chinese patent application No. 201210232573.8 filed with the Chinese Patent Office on July 5, 2012, titled "Shared Presenting Method and System".

### Technical field

The present invention relates to the technical field of playing file, and particularly to a shared presenting method, a shared presenting system and a mobile device.

### Background of the invention

With the development and increasingly widespread use of mobile processing devices such as smart phones and Tablet PCs, there has been software dedicated for mobile devices for opening presentation files. Currently, when a user needs to display a presentation file during a conference, the user can only play a slide film with a PC or projector, while conference participants cannot participate with their own mobile devices. Thus, it is inconvenient.

Also, in the art are known some devices or methods as described in their respective documents.

For example, US 7 353 252 B1 discloses a system and method for electronic file collaboration that allows for multi-user in a peer-to-peer architecture sharing of one or more electronic files. In the method, a client can initiate a collaborative meeting with another client by loading a locally stored document using a collaboration application software. The document or file is on, a local drive or a mapped network drive. The client starts a conference, and the other client joins the conference. The client sends control data such as channel and port number for establishing a bi-directional connection to the other client such as identification of a channel based on sockets. The loaded document is then sent to the other client from the client via the established connection. The other client stores the document into its runtime memory, but does not have the ability to save or print the document owned by and being hosted from the client. Conference control messages are transmitted which allow markups and other operations on the document, the forwarding of a second document from the client to the other client and the forwarding of a third document from the other client to the client. Upon termination of the conference, which can be initiated by either the client or the other client, the second document and any markups thereof are saved at the other client. During the conference, markups and view manipulations are synchronized between conference members by control messages applying to each local copy in memory.

WO 00/00912 A1 discloses a system and method for sharing data files among a plurality of conference participants. The system includes a plurality of conferencing stations operably coupled to a communications network. The method comprises the steps of: routing a data file that includes at least one data object to each one of the participants before the conference is commenced; assigning to each data object of said document an identifier for indicating the last modification of said data object; establishing a conference and distributing a list of data object identifications among said participants and the data objects which need to be modified during said conference; generating a shared document that comprises at least one data object at each participant; editing said at least one data object for providing a modified data object; and distributing the modified data object among said participants for updating said shared document of each participants.

US 2006/026502 A1 discloses a network-distributed document collaboration interface for document review sessions that permits multiple participants to view, markup, and annotate a document. The method comprises: establishing a document collaboration session; defining a group of one or more users permitted to participate in the document collaboration session; defining one or more documents to be part of the document collaboration session; defining a synchronous mode or an asynchronous mode of operation for the document collaboration session; permitting the one or more users to make changes to the one or more documents; and propagating the changes to the one or more documents to the users in the group.

### Contents of the invention

With regard to the aforesaid problem in the prior art, the purpose of the present invention is to provide a shared presenting method capable of presenting a presentation file among a plurality of mobile devices simultaneously. The purpose of the present invention is to further provide a shared presenting system and a mobile device for implementing said method. The embodiments of the present invention disclose a shared presenting method, a shared presenting system and a mobile device for implementing said method according to the appended claims.

As compared with the prior art, the shared presenting method, system and mobile device can control a playing control operation performed to a presentation file by each receiver through setting up a shared presentation room among a plurality of mobile devices via a network, wherein an initiator sends a presenting file and a playing control instruction for said presenting file to a receiver plug-in that has joined in said shared presentation room, which is of great convenience.

### Brief description of the drawings

Fig. 1 is a flow chart of a shared presenting method according to an embodiment of the present invention;
Fig. 2 is a flow chart of another shared presenting method according to an embodiment of the present invention;
Fig. 3 is a flow chart of a further shared presenting method according to an embodiment of the present invention;
Fig. 4 is a flow chart of a shared presenting system according to an embodiment of the present invention;
Fig. 5 is a flow chart of another shared presenting system according to an embodiment of the present invention;
Fig. 6 is a flow chart of a further shared presenting system according to an embodiment of the present invention;

### Description of the preferred embodiment

The specific modes of carrying out the present invention are described hereinafter in detail. It should be understood that the specific modes of carrying out the present invention described herein are only used for describing and explaining the present invention rather than limiting the present invention.

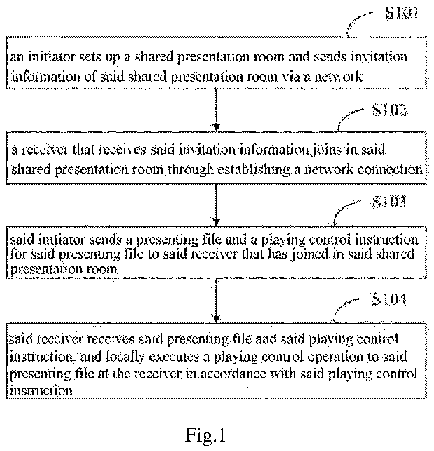

Referring to Fig. 1, which is a flow chart of a shared presenting method according to an embodiment of the present invention. The shared presenting method of this embodiment comprises the following steps:
Step S101, an initiator sets up a shared presentation room and sends invitation information of said shared presentation room via a network.

In the present embodiment, said initiator is usually a mobile device having a playing material such as a presentation file and being ready to provide a uniform playing file picture for sharing by other mobile devices, which is usually a mobile device of a conference host; and a receiver is usually a mobile device of a conference participant ready to receive picture data shared by said initiator. These mobile devices can be handheld devices such as smart phones, or other processing devices capable of playing a presentation file, wherein there are usually one initiator and one or more receivers.

Said shared presentation room is a virtual presentation room established between two or more mobile devices via a network interconnection within a certain range, which is set up by a device acting as the initiator and authorized by said initiator to allow participation of other devices. The initiator and receiver(s) in said shared presentation room can connect with each other in a point to multipoint network connection manner or a multipoint interconnect network connection manner.

In this step, said initiator can send invitation information of said shared presentation room to other mobile devices within a certain distance by means of network communication such as Wi-Fi. In an embodiment, the invitation information of said shared presentation room includes an IP address of said initiator; each of said receivers establishes a network connection with said initiator in accordance with the IP address in said invitation information and joins in said shared presentation room.

Step S102: a receiver that receives said invitation information joins in said shared presentation room through establishing a network connection.

Any mobile device within the coverage range of the invitation information of said shared presentation room can act as a receiver. Upon receiving the invitation information sent by said initiator, a receiver can select to join in or not to join in said shared presentation room based on said invitation information; a receiver, if selecting to join in said shared presentation room, joins in the network interconnection of said shared presentation room through establishing a network connection.

In an embodiment, said initiator can preset an authorization key of said shared presentation room when initiating said shared presentation room invitation, and require a receiver intending to join in said shared presentation room to input the authorization key for confirmation.

Said receiver sends the authorization key of said shared presentation room to said initiator; said initiator receives the authorization key sent by said receiver and compares it with the preset authorization key, and makes a receiver having a consistent authorization key to join into said shared presentation room.

By means of setting an authorization key, only when said receiver inputs a correct and consistent authorization key, corresponding said receiver is allowed to join in said shared presentation room. In this way, the confidentiality of the presenting content in the shared presentation room can be enhanced by preventing irrelevant people from joining in the shared presentation room to steal the presenting content after receiving the invitation information.

In an embodiment, said initiator can transmit said IP address or authorization key in the manner of Morse codes through sound. Thus, only a mobile device that has received said sound signal and has the capability of decoding Morse codes can access said shared presentation room. Wherein, said Morse code is a type of on-and-off signal code which indicates different alphabets, numbers and punctuations through different arranging sequences. It can prevent illegal access by people irrelevant to the conference and ensure the privacy of the conference.

Furthermore, after each of said receivers joins in said shared presentation room, said initiator can create an address list including an IP address of said initiator and IP addresses of each receivers, said initiator and said receivers can perform data transmission by searching for an address in said address list. By creating said address list, communication between the initiator and the receivers can be realized conveniently and communication among the receivers can be realized conveniently, too.

Step S103: said initiator sends a presenting file and a playing control instruction for said presenting file to said receiver that has joined in said shared presentation room.

When sending said presenting file, said initiator can send said presenting file to all of said receivers that have joined in said shared presentation room simultaneously in a broadcast manner; or send said presenting file to each of said receivers through a network connection established with each of said receivers respectively.

Wherein said playing control instruction is preferably identical with a local operation of said initiator.

That is, said initiator generates a corresponding playing control instruction in accordance with a playing control operation performed to said presenting file at the initiator locally and sends said playing control instruction to said receivers that have joined in said shared presentation room.

Thus, each receiver can execute a completely identical operation with said initiator in accordance with said playing control instruction, thereby realizing synchronization of operation.

Step S104: said receiver receives said presenting file and said playing control instruction, and locally executes a playing control operation to said presenting file at the receiver in accordance with said playing control instruction.

In this step, each receiver that has joined in said shared presentation room receives said presenting file sent by said initiator, stores said presenting file locally, opens said presenting file locally with a corresponding application program and executes a corresponding playing control operation to said presenting file in accordance with said received playing control instruction, thereby realizing an initiator controlling a plurality of receivers to present a uniform presenting file.

In step S103, since the presenting file per se is sent, thus, each receiver has actually obtained said presenting file and can store said presenting file. Transmission of said presenting file is required only once. After the receivers have received said presenting file, only a playing control instruction of a small amount of data needs to be sent to each receiver in the process of presenting, and each receiver executes a corresponding operation in accordance with said playing control instruction, thereby greatly reducing the amount of data transmitted during the presenting course.

Since shared playing is realized between mobile devices of an initiator and receivers within a certain distance, the demand on bandwidth is not high. Thus, all presenting file content is transmitted once in the embodiment of the present invention instead of transmitting and playing page by page in accordance with the page flipping of the initiator during the course of playing. It is proved that there is no picture delay or jam. When all presenting files are ready at all receivers, the initiator only needs to transmit a playing control instruction to implement the playing control operation when starting the speech, whereby ensuring a small transmission amount and smooth switching and displaying of pictures during the entire conference.

As compared with the prior art, the shared presenting method in this embodiment of the present invention can control a playing control operation performed to a presentation file by each receiver through setting up a shared presentation room among a plurality of mobile devices via a network, wherein an initiator sends a presenting file and a playing control instruction for said presenting file to a receiver plug-in that has joined in said shared presentation room, which is of great convenience.

As a preferred implementing manner of the shared presenting method in this embodiment of the present invention, said shared presenting method further comprises the following steps of marking the presenting file in the process of presenting:
said receiver, upon detecting a local marking operation to said presenting file, sends information of said marking operation to said initiator;
said initiator further executes a marking operation to said presenting file in accordance with the local marking operation at the initiator or said received marking operation information sent by said receiver, generates a corresponding marking operation instruction, and sends said marking operation instruction to said receiver that has joined in said shared presentation room;
each receiver receives said marking operation instruction and executes a marking operation to said presenting file.

Wherein, the user of said initiator or the user of said receiver can execute a marking operation in the local device at the initiator or the local device of the receiver by using various touch-sensitive systems or a laser pointer, etc.

In said step of marking said presenting file, if the marking operation is initiated by a receiver, then there are the following three implementing manners:
Implementing manner 1: upon detection of a local marking operation to said presenting file, a receiver displays a result of said marking operation on a local device and simultaneously sends the marking operation information to the initiator. The initiator can collect marking operation information of any receiver, and generate and send a marking operation instruction to each receiver. The receivers identify the marking operation instruction and determine whether or not it is an instruction initiated by a receiver of a local device, if a local device has displayed a result of the marking operation, then it is not displayed repetitively.

In the aforesaid implementing manner, a receiver can immediately display the result of its own marking operation, thereby avoiding network delay.
Implementing manner 2: upon detection of a local marking operation to said presenting file, a receiver does not display a result of said marking operation on a local device immediately, instead, the receiver generates a marking operation instruction and sends the marking operation instruction to the initiator as marking operation information. The initiator collects marking operation information of all the receivers and generates and sends a marking operation instruction to each receiver, wherein the marking operation instruction may include color identifying information set for distinguishing different receivers. The receiver does not need to determine whether or not it is a marking operation initiated by the device of its own with regard to the marking operation instruction, instead, the receiver executes all of the obtained marking operation instruction.

In this implementing manner, the initiator is responsible for receiving and allocating operation instructions of all devices, and can uniformly calculate a time sequence of initiating a marking operation of the initiator and the receivers. Thus, the amount of calculation at a receiver device is small and system consumption of the receivers can be reduced.
Implementing manner 3: upon detection of a local marking operation to said presenting file, a receiver displays a result of said marking operation on a local device and simultaneously sends the marking operation information to the initiator. The initiator, after collecting all marking operation information sent by the receivers, generates and sends a marking operation instruction to each receiver. In order to avoid the device of a receiver displaying a marking operation result of the device its own repetitively, said marking operation instruction is not sent to said receiver sending the marking operation information. That is, when sending a marking operation instruction to the receivers, the initiator identifies an identity of a receiver and determines whether or not the marking operation instruction to be sent is sent by the receiver, if so, the initiator does not send a marking operation instruction to the receiver again, if not, the initiator sends the marking operation instruction to the receiver. The technical solution of the initiator actively determining whether or not to send a marking operation instruction to a receiver can effectively prevent repetitive transmission of useless data to a receiver.

In said implementing manner 3, a user can display his/her own operation, and avoid increasing his/her own calculation amount in the meanwhile, such that the mobile phone has a fast response speed during corresponding playing course.

That is, if the receiver detects a marking operation by a local user when playing said presenting file, then the receiver sends information of said marking operation to said initiator. Said receiver can calculate a position of said marking operation in said presenting file based on a position of said marking operation on the screen and a position of the presenting file that is locally played. For instance, a receiver first obtains coordinate information of the marking operation on the screen and coordinate information of the presenting file on the screen, then calculates a position of the presenting file where the marking operation is located, e.g. on which page of the presenting file, at what coordinate position on the page. The position of the marking operation in the presenting file is which letters/characters or images in which line on which page of the presenting file the marking operation is directed.

Then, said position, a type of said marking operation and identification information of the receiver are all transmitted to said initiator together. Wherein, the type of the marking operation can be existing editing and marking operations to a file, such as drawing a straight line, a curve, bold or italic etc. Identification information of a receiver can be a device identifier of the receiver or an IP address of the receiver.

Said initiator, upon receiving said marking operation information or upon detecting a local marking operation at the initiator, executes a corresponding marking operation to said presenting file in accordance with the position and type of said marking operation, generates a corresponding marking operation instruction including the position and type of said marking operation, and sends said marking operation instruction to said receivers that have joined in said shared presentation room.

In this embodiment, upon detecting a local marking operation at the initiator, the initiator can obtain a position of the presenting file where the local marking operation at the initiator is located by using the method of a receiver calculating a position of the presenting file where the file marking operation is located.

Each receiver receives said marking operation instruction, executes a marking operation to said presenting file and add a corresponding mark into said presenting file. Adding of said marking operation can be performed in a revise mode, or said marking operation is added into said presenting file in the form of a comment.

Preferably, said initiator further adds a device identifier or IP address that has initiated said marking operation in said marking operation instruction. The device identifier or IP address that has initiated said marking operation herein can be a device identifier or IP address of the initiator that has initiated said marking operation or a device identifier or IP address of a receiver that has initiated the marking operation. Said initiator and the receivers further execute a marking operation to said presenting file with different colors in accordance with different device identifiers when executing a marking operation to said presenting file so as to clearly distinguish markings of different operators via marks of different colors.

Specifically, when a receiver sends marking operation information to the initiator, the initiator uniformly define different colors in time sequence respectively in accordance with different device numbers of the receivers based on the received marking operation information of the receivers and defines a different color for the initiator. The initiator sends information of defining the colors to the receivers along with said marking operation instruction. The receivers display marks made by the initiator or the receivers with different colors respectively in accordance with the information of defining the colors sent by the initiator.

With the shared presenting method of this embodiment of the present invention, sharing of marking information of operators is realized in the meanwhile when sharing a playing file. When an operator of said initiator or receivers needs to perform marking to the current presenting file and wishes to show the marking to other participants, he/she can easily realize sharing of said marking operation between said initiator and said receivers. Since the receivers perform marking to the presenting file respectively, said marking can be stored by the receivers at the end of the presenting to facilitate reviewing by users of the receivers.

As another preferred embodiment, said initiator further sends a synchronization signal to said receivers that have joined in said shared presentation room; each receiver receives said synchronization signal and synchronously executes a playing control operation to said presenting file in accordance with said synchronization signal.

Wherein, said synchronization signal can be a page flip signal of the presenting file of the initiator, said receivers receive said page flip signal of the presenting file and flip said presenting file to a corresponding page in accordance with said page flip signal of the presenting file. Of course, the synchronization signal can be a page flip signal of the presenting file sent by a receiver, the initiator and other receivers receive the page flip signal and flip said presenting file to a corresponding page in accordance with said page flip signal. The other receivers may receive the page flip signal in the manner that the initiator receives a page flip signal of a particular receiver and then sends to the other receivers.

As a specific embodiment, the synchronization signal is a signal of performing the action of flipping to a particular page and a signal of performing the next playing action.

As a specific embodiment, the synchronization signal is sent in the same network.

In this way, through said synchronization signal, said initiator and said receivers can execute the corresponding playing control operation synchronously, thereby avoiding the problem of playing out-of-sync among the mobile devices of said shared presentation room caused by instruction transmission and delay.

In actual application, a receiver may occasionally fail to receive a particular synchronization signal. However, once receiving a signal of "flipping to a particular page", a receiver will directly flip to that page so as to perform a synchronization correction.

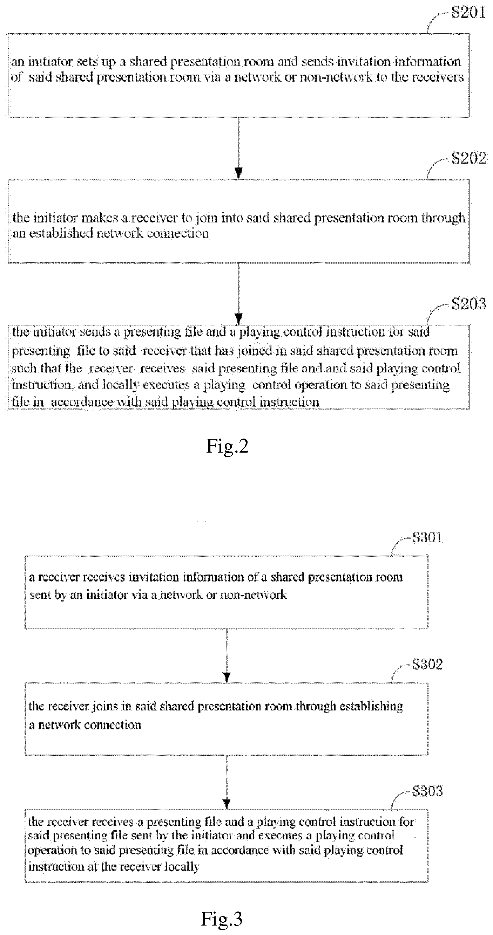

Referring to Fig. 2, which is a flow chart of another shared presenting method according to an embodiment of the present invention. The shared presenting method of this embodiment for application by an initiator comprises the following steps:
Step S201, an initiator sets up a shared presentation room and sends invitation information of said shared presentation room via a network or non-network to the receivers.

In actual application, an initiator can send said invitation information of said shared presentation room via a network or send said invitation information of said shared presentation room to a receiver via non-network. For instance, the initiator user can directly send said invitation information of said shared presentation room to a receiver manually as long as the receiver user can acquire said invitation information.

Step S202: the initiator makes a receiver to join into said shared presentation room through an established network connection.

In this embodiment, a receiver may initiatively establish a network connection with said initiator upon receiving the invitation information, and the initiator makes the receiver join into said shared presentation room. Or, the initiator may establish a network connection with a receiver upon receiving feedback information that the receiver has received the invitation information and makes the receiver to join into said shared presentation room.

Step S203: the initiator sends a presenting file and a playing control instruction for said presenting file to said receiver that has joined in said shared presentation room such that the receiver receives said presenting file and said playing control instruction, and locally executes a playing control operation to said presenting file in accordance with said playing control instruction.

Wherein, the step that the initiator sends a presenting file and a playing control instruction for said presenting file to said receiver that has joined in said shared presentation room comprises: the initiator sends a presenting file to said receiver that has joined in said shared presentation room;

That is, said initiator generates a corresponding playing control instruction in accordance with a playing control operation performed to said presenting file at the initiator locally and sends said presenting file and said corresponding playing control instruction to said receivers that have joined in said shared presentation room.

Specifically, the initiator may send the presenting file to a receiver first, and sends a playing control instruction after a preset period of time or upon receiving information fed back by the receiver that reception of the presenting file has completed. In this way, it can be ensured that all receivers have received the presenting file when playing.

Of course, the initiator can send a presenting file and a playing control instruction to a receiver simultaneously, for instance, after sending a page of the file, sending a playing control instruction regarding said page of the file. Or, the initiator sends the presenting file and a first playing control instruction to a receiver simultaneously, for instance, sending the complete presenting file and a playing control instruction including a playing start time to a receiver simultaneously.

In actual application, a recommended manner is that an initiator sends the complete presenting file to a receiver first, and then sends a playing control instruction to the receiver upon determining that reception of the presenting file has completed.

In this embodiment, the presenting course further comprises: the initiator executes a marking operation to said presenting file in accordance with a local marking operation of the initiator or received marking operation information sent by said receiver and generates a corresponding marking operation instruction; wherein said marking operation information sent by said receiver is sent to the initiator by said receiver upon detection of a local marking operation to said presenting file; the initiator sends said marking operation instruction to the receivers that have joined in said shared presentation room such that the receivers receive said marking operation instruction and execute a marking operation to said presenting file.

In this embodiment, said marking operation instruction further comprises a device identifier of a receiver or the initiator that initiates said marking operation such that each receiver further executes a marking operation to said presenting file with a different color in accordance with a different device identifier when executing a marking operation to said presenting file.

Preferably, said initiator sends a synchronization signal to said receiver that has joined in said shared presentation room such that each of said receivers receives said synchronization signal and synchronously executes a playing control operation to said presenting file in accordance with said synchronization signal; or

Wherein, said synchronization signal can be a page flip signal of the presenting file of the initiator, said receivers receive said page flip signal of the presenting file and flip said presenting file to a corresponding page in accordance with said page flip signal of the presenting file. Of course, the synchronization signal can be a page flip signal of the presenting file sent by a receiver, the initiator and other receivers receive the page flip signal and flip said presenting file to a corresponding page in accordance with said page flip signal. The other receivers may receive the page flip signal in the manner that the initiator receives a page flip signal of a particular receiver and then sends to the other receivers.

As a specific embodiment, the synchronization signal is a signal of performing the action of flipping to a particular page and a signal of performing the next playing action.

As a specific embodiment, the synchronization signal is sent in the same network.

In this embodiment, the operation of the initiator is the same as the operation of the initiator in the embodiment shown in Fig. 1, and the details can be seen in the detailed description with regard to Fig. 1.

Referring to Fig. 3, which is a flow chart of another shared presenting method according to an embodiment of the present invention. The shared presenting method of this embodiment for application by an receiver comprises the following steps:
Step S301: a receiver receives invitation information of a shared presentation room sent by an initiator via a network or non-network. Said shared presentation room is set up by the initiator.

The invitation information in this embodiment is received via a network or non-network, for instance, the invitation information can be received via a wireless network or directly received from the initiator user in a manual manner.

Step S302: the receiver joins in said shared presentation room through establishing a network connection.

In this embodiment, a receiver may initiatively establish a network connection with said initiator upon receiving the invitation information, and the initiator makes the receiver to join into said shared presentation room. Or, the initiator may establish a network connection with a receiver upon receiving feedback information that the receiver has received the invitation information and makes the receiver join into said shared presentation room.

Step S303: the receiver receives a presenting file and a playing control instruction for said presenting file sent by the initiator and executes a playing control operation to said presenting file in accordance with said playing control instruction at the receiver locally.

Corresponding to the embodiment shown in Fig. 2, in this embodiment, the initiator may send the presenting file to a receiver first, and sends a playing control instruction after a preset period of time or upon receiving information fed back by the receiver that reception of the presenting file has completed. In this way, it can be ensured that all receivers have received the presenting file when playing.

Of course, the initiator can send a presenting file and a playing control instruction to a receiver simultaneously, for instance, after sending a page of the file, sending a playing control instruction regarding said page of the file. Or, the initiator sends the presenting file and a first playing control instruction to a receiver simultaneously, for instance, sending the complete presenting file and a playing control instruction including a playing start time to a receiver simultaneously.

In actual application, a recommended manner is that an initiator sends the complete presenting file to a receiver first, and then sends a playing control instruction to the receiver upon determining that reception of the presenting file has completed.

In this embodiment, the presenting course further comprises: the receiver detects a marking operation by a local user and sending information of said marking operation to said initiator; the receiver receives a marking operation instruction sent by the initiator and executes a marking operation to said presenting file.

In this embodiment, said marking operation instruction further comprises a device identifier of a receiver or the initiator that initiates said marking operation such that each receiver further executes a marking operation to said presenting file with a different color in accordance with a different device identifier when executing a marking operation to said presenting file.

In this embodiment, the receiver may receive a synchronization signal sent by the initiator and synchronously execute a playing control operation to said presenting file in accordance with said synchronization signal. Said synchronization signal is a page flip signal of the presenting file of the initiator. Each of said receivers receives said page flip signal of the presenting file and flips said presenting file to a corresponding page in accordance with said page flip signal of the presenting file. Of course, the synchronization signal can be a page flip signal of the presenting file sent by a receiver, the initiator and other receivers receive the page flip signal and flip said presenting file to a corresponding page in accordance with said page flip signal. The other receivers may receive the page flip signal in the manner that the initiator receives a page flip signal of a particular receiver and then sends to the other receivers.

As a specific embodiment, the synchronization signal is a signal of performing the action of flipping to a particular page and a signal of performing the next playing action.

As a specific embodiment, the synchronization signal is sent in the same network.

In this embodiment, the operation of the receiver is the same as the operation of the receiver in the embodiment shown in Fig. 1, and the details can be seen in the detailed description with regard to Fig. 1.

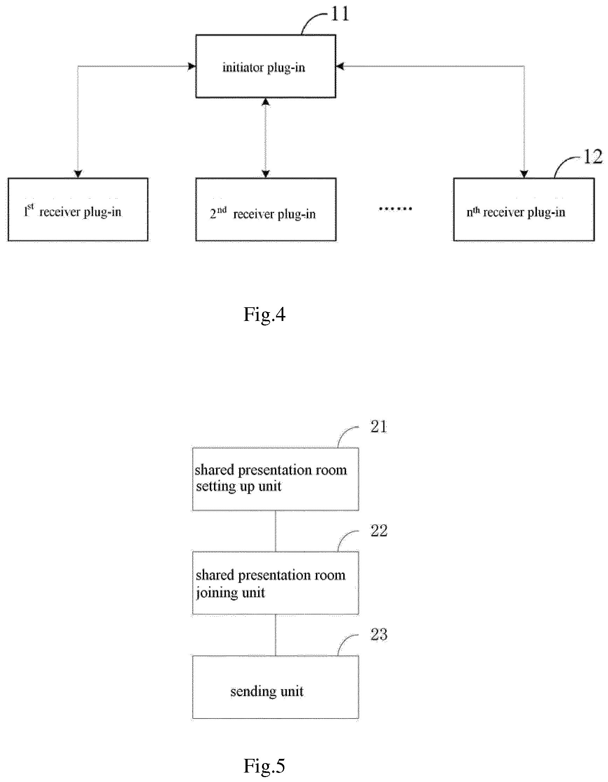

Referring to Fig. 4, which is a flow chart of a shared presenting system according to an embodiment of the present invention.

A shared presenting system in this embodiment comprises an initiator plug-in 11 and a receiver plug-in 12.

Said initiator plug-in 11 is used for setting up a shared presentation room, sending invitation information of said shared presentation room via a network and sending a presenting file and a playing control instruction for said presenting file to a receiver plug-in 12 that has joined in said shared presentation room.

Said receiver plug-in 12 is used for receiving said invitation information, joining in said shared presentation room through establishing a network connection, receiving said presenting file and said playing control instruction, and executing a playing control operation to said presenting file in accordance with said playing control instruction at the receiver locally.

Wherein, said initiator is usually a mobile device having a playing material such as a presentation file and being ready to provide a uniform playing file picture for sharing by other mobile devices, which is usually a mobile device of a conference host; and a receiver is usually a mobile device of a conference participant ready to receive picture data shared by said initiator. These mobile devices can be handheld devices such as smart phones, or other processing devices capable of playing a presentation file, wherein there is usually one initiator and one or more receivers. Said initiator plug-in 11 is installed in a mobile device of said initiator; said receiver plug-in 12 is installed in a mobile device of said receiver.

Said shared presentation room is a virtual presentation room established between two or more mobile devices via a network interconnection within a certain range, which is set up by a device acting as the initiator and authorized by said initiator to allow participation of other devices. The initiator and receiver(s) in said shared presentation room can connect with each other in a point to multipoint network connection manner or a multipoint interconnect network connection manner.

Said initiator plug-in 11 can send invitation information of said shared presentation room to other mobile devices within a certain distance by means of network communication such as Wi-Fi. In an embodiment, invitation information of said shared presentation room includes an IP address of said initiator; and each of said receiver plug-ins 12 establishes a network connection with said initiator plug-in 11 in accordance with the IP address in said invitation information and joins in said shared presentation room.

Any mobile device within the coverage range of the invitation information of said shared presentation room can act as a receiver. Upon receiving invitation information sent by said initiator, a receiver can select to join in or not to join in said shared presentation room through a corresponding receiver plug-in 12. After the receiver plug-in 12 selects to join in said shared presentation room, the receiver plug-in 12 joins in the network interconnection of said shared presentation room through establishing a network connection and participates in the shared presenting.

In an embodiment, said initiator can preset an authorization key of said shared presentation room when initiating said shared presentation room invitation, and require a receiver intending to join in said shared presentation room to input the authorization key for confirmation.

Said receiver sends the authorization key of said shared presentation room to said initiator; said initiator receives the authorization key sent by said receiver and compares it with the preset authorization key of said shared presentation room, and makes a receiver having a consistent authorization key to join into said shared presentation room.

By means of setting an authorization key, only when said receiver inputs a correct and consistent authorization key, corresponding said receiver is allowed to join in said shared presentation room. In this way, the confidentiality of the presenting content in the shared presentation room can be enhanced by preventing irrelevant people from joining in the shared presentation room to steal the presenting content after receiving the invitation information.

In an embodiment, said initiator plug-in 11 can transmit said IP address or authorization key in the manner of Morse codes through sound. Thus, only a mobile device that has received said sound signal and has the capability of decoding Morse codes can access said shared presentation room. Wherein, said Morse code is a type of on-and-off signal code which indicates different alphabets, numbers and punctuations through different arranging sequences. It can prevent illegal access by people irrelevant to the conference and ensure the privacy of the conference.

Furthermore, after each of said receivers joins in said shared presentation room, said initiator plug-in 11 can create an address list including an IP address of said initiator and IP addresses of the receivers, said initiator plug-in 11 and each of said receiver plug-ins 12 can perform data transmission by searching for an address in said address list. By creating said address list, communication between the initiator and the receivers can be realized conveniently and communication among the receivers can be realized conveniently, too.

When sending said presenting file, said initiator plug-in 11 can send said presenting file to all of said receiver plug-ins 12 that have joined in said shared presentation room simultaneously in a broadcast manner; or send said presenting file to each of said receiver plug-ins 12 through a network connection established with each of said receivers respectively.

Wherein said playing control instruction is preferably identical with a local operation of said initiator.

That is, said initiator plug-in 11 generates a corresponding playing control instruction in accordance with a playing control operation performed to said presenting file at the initiator locally and sends said playing control instruction to said receiver plug-ins 12 that have joined said shared presentation room..

Thus, each receiver can execute a completely identical operation with said initiator in accordance with said playing control instruction, thereby realizing synchronization of operation.

In this step, each receiver that has joined in said shared presentation room receives said presenting file sent by said initiator, stores said presenting file locally, opens said presenting file locally with a corresponding application program and executes a corresponding playing control operation to said presenting file in accordance with said received playing control instruction, thereby realizing an initiator controlling a plurality of receivers to present a uniform presenting file.

Since the presenting file per se is sent, each receiver has actually obtained said presenting file and can store said presenting file. Transmission of said presenting file is required only once. After the receivers have received said presenting file, only a playing control instruction of a small amount of data needs to be sent to each receiver in the process of presenting, and each receiver executes a corresponding operation in accordance with said playing control instruction, thereby greatly reducing the amount of data transmitted during the presenting course.

As compared with the prior art, the shared presenting system of the present invention can control a playing control operation performed to a presentation file by each receiver through setting up a shared presentation room among a plurality of mobile devices via a network, wherein an initiator sends a presenting file and a playing control instruction for said presenting file to a receiver plug-in that has joined in said shared presentation room, which is of great convenience.

As a preferred embodiment, said receiver plug-in 12, upon detecting a marking operation to said presenting file at the receiver locally, sends information of said marking operation to said initiator plug-in 11.

Said initiator plug-in 11 further executes a marking operation to said presenting file in accordance with a local marking operation of the initiator or the received information of marking operation sent by said receiver plug-in 12, generates a corresponding marking operation instruction, and sends said marking operation instruction to the receiver plug-ins 12 that have joined in said shared presentation room.

Each of said receiver plug-ins 12 receives said marking operation instruction and executes a marking operation to said presenting file.

Wherein, the user of said initiator or the user of said receiver can execute a marking operation in the local device at the initiator or the local device of the receiver by using various touch-sensitive systems or a laser pointer, etc.

That is, if the receiver plug-in 12 detects a marking operation by a local user when playing said presenting file, then the receiver sends information of said marking operation to said initiator plug-in 11. Said receiver plug-in 12 can calculate a position of said marking operation in said presenting file based on a position of said marking operation on the screen and a position of the presenting file that is locally played. For instance, a receiver plug-in 12 first obtains coordinate information of the marking operation on the screen and a position of the presenting file where the marking operation is located, that is, on which page of the presenting file, and then calculates a position of the marking operation in the presenting file, that is, which letters/characters or images in which line on which page of the presenting file the marking operation is directed.

Then, said receiver plug-in 12 transmits said position, a type of said marking operation and a device identifier of the receiver or an IP address of the receiver to said initiator plug-in 11 together. Wherein, the type of the marking operation can be existing editing and marking operations to a file, such as drawing a straight line, a curve, bold or italic, etc.

Said initiator plug-in 11, upon receiving said marking operation information or upon detecting a local marking operation at the initiator, executes a corresponding marking operation to said presenting file in accordance with the position and type of said marking operation, generates a corresponding marking operation instruction including the position and type of said marking operation, and sends said marking operation instruction to said receiver plug-ins 12 that have joined in said shared presentation room.

In this embodiment, upon detecting a local marking operation at the initiator, the initiator plug-in 11 can obtain a position of the presenting file where the local marking operation at the initiator is located by using the method of a receiver plug-in 12 calculating a position of the presenting file where the file marking operation is located.

Each of the receiver plug-ins 12 receives said marking operation instruction, executes a marking operation to said presenting file and adds a corresponding mark into said presenting file. Adding of said marking operation can be performed in the modification mode, or said marking operation is added into said presenting file in the form of a comment.

Preferably, said initiator plug-in 11 further adds an identifier of the device that has initiated said marking operation in said marking operation instruction. Said initiator plug-in 11 and each of the receiver plug-ins 12 further execute a marking operation to said presenting file with different colors in accordance with different device identifiers when executing a marking operation to said presenting file so as to clearly distinguish markings of different operators via marks of different colors.

Specifically, when a receiver plug-in 12 sends marking operation information to the initiator plug-in 11, the initiator plug-in 11 uniformly define different colors in time sequence respectively in accordance with different device numbers of the receivers based on the received marking operation information of the receivers and defines a different color for the initiator. The initiator plug-in 11 sends information of defining the colors to the receiver plug-ins 12 along with said marking operation instruction. Each of the receiver plug-ins 12 displays marks made by the initiator or the receivers with different colors respectively in accordance with the information of defining the colors sent by the initiator.

With the shared presenting system of the present invention, marking information of operators can be shared in the meanwhile when sharing a playing file. When an operator of said initiator or receivers needs to perform marking to the current presenting file and wishes to show the marking to other participants, he/she can easily realize sharing of said marking operation between said initiator and said receivers. Since each receiver performs marking to the presenting file respectively, said marking can be stored by the receivers at the end of the presenting to facilitate reviewing by users of the receivers.

As another preferred embodiment, said initiator further sends a synchronization signal to said receivers that have joined in said shared presentation room; each receiver receives said synchronization signal and synchronously executes a playing control operation to said presenting file in accordance with said synchronization signal.

Through said synchronization signal, said initiator and said receivers can execute the corresponding playing control operation synchronously, thereby avoiding the problem of playing out-of-sync among the mobile devices of said shared presentation room caused by instruction transmission and delay.

Said synchronization signal can be a page flip signal of the presenting file of the initiator, each of said receivers receives said page flip signal of the presenting file and flips said presenting file to a corresponding page in accordance with said page flip signal of the presenting file.

Referring to Fig.5, which is an illustration of the structure of another shared presenting system according to an embodiment of the present invention. The shared presenting system of this embodiment, corresponding to the method shown in Fig. 2, for application by an initiator, comprising: a shared presentation room setting up unit 21, a shared presentation room joining unit 22 and a sending unit 23.

Said shared presentation room setting up unit 21 is used for setting up a shared presentation room and sending invitation information of said shared presentation room to a receiver via a network or non-network;
said shared presentation room joining unit 22 is used for joining a receiver into said shared presentation room through an established network connection;
said sending unit 23 is used for sending a presenting file and a playing control instruction for said presenting file to a receiver that has joined in said shared presentation room such that the receiver receives said presenting file and said playing control instruction, and locally executes a playing control operation to said presenting file in accordance with said playing control instruction.

In this embodiment, said sending unit 23 is specifically used for generating a corresponding playing control instruction in accordance with a local playing control operation to said presenting file by said initiator, and sending a presenting file and said corresponding playing control instruction to said receiver that has joined in said shared presentation room.

The shared presenting system of this embodiment further comprises: a marking operation instruction generating unit and a marking operation instruction sending unit.

Said marking operation instruction generating unit is used for performing a marking operation to said presenting file and generating a corresponding marking operation instruction in accordance with a local marking operation of the initiator or received marking operation information sent by said receiver in the process of presenting.

Said marking operation instruction sending unit is used for sending said marking operation instruction to a receiver that has joined in said shared presentation room such that each receiver receives said marking operation instruction and executes a marking operation to said presenting file.

In this embodiment, said marking operation instruction generating unit is further used for including a device identifier of a receiver or the initiator that initiates said marking operation in said marking operation instruction such that each receiver further executes a marking operation to said presenting file with a different color in accordance with a different device identifier when executing a marking operation to said presenting file.
said synchronization signal sending unit is used for sending a synchronization signal to said receiver that has joined in said shared presentation room such that each of said receivers receives said synchronization signal and synchronously executes a playing control operation to said presenting file in accordance with said synchronization signal; or
Said synchronization signal is a page flip signal of the presenting file of the initiator such that each of said receivers receives said page flip signal of the presenting file and flips said presenting file to a corresponding page in accordance with said page flip signal of the presenting file.

The shared presenting system of this embodiment corresponds to the method embodiment shown in Fig.2, and a reference can be made to the detailed description of Fig. 2.

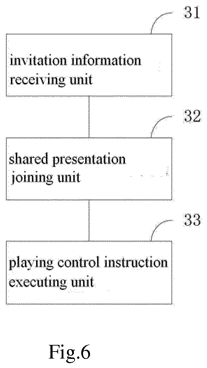

Referring to Fig. 6, which is an illustration of the structure of a further shared presenting system according to an embodiment of the present invention. The shared presenting system of this embodiment, corresponding to the method shown in Fig. 3, for application by a receiver, comprising: an invitation information receiving unit 31, a shared presentation room joining unit 32, and a playing control instruction executing unit 33.

Said invitation information receiving unit 31 is used for receiving invitation information of a shared presentation room sent by an initiator via a network or non-network when setting up a shared presentation room;
said shared presentation room joining unit 32 is used for joining in said shared presentation room through establishing a network connection;
said playing control instruction executing unit 33 is used for receiving a presenting file and a playing control instruction for said presenting file sent by the initiator and executing a playing control operation to said presenting file in accordance with said playing control instruction at the receiver locally.

The shared presenting system of this embodiment may further comprise: a marking operation information sending unit and a marking operation instruction receiving unit;
said marking operation information sending unit is used for, upon detecting a marking operation by a local user, sending information of said marking operation to said initiator in the process of presenting;
said marking operation instruction receiving unit is used for receiving a marking operation instruction sent by the initiator and executing a marking operation to said presenting file in the process of presenting.

In this embodiment said marking operation instruction received by
said marking operation instruction receiving unit further comprises a device identifier of a receiver or the initiator that initiates said marking operation; said marking operation instruction receiving unit further executes a marking operation to said presenting file with a different color in accordance with a different device identifier when executing a marking operation to said presenting file.

The shared presenting system of this embodiment further comprises a synchronization signal receiving unit; said synchronization signal receiving unit is used for receiving a synchronization signal sent by the initiator and synchronously executing a playing control operation to said presenting file in accordance with said synchronization signal.

Said synchronization signal is a page flip signal of the presenting file of the initiator, each of said receivers receives said page flip signal of the presenting file and flips said presenting file to a corresponding page in accordance with said page flip signal of the presenting file.

The shared presenting system of this embodiment corresponds to the method embodiment shown in Fig.2, and a reference can be made to the detailed description of Fig. 3.

Besides, an embodiment of the present invention further provides a mobile device comprising any of said shared presenting system described in the embodiment shown in Fig. 4, or said shared presenting system described in the embodiment shown in Fig. 5, or said shared presenting system described in the embodiment shown in Fig. 6.

The mobile device in the embodiment of the present invention can be a mobile device such as a smartphone or a TabletPC.

## Claims

1. A shared presenting method, said shared presenting method is adapted to an initiator mobile device, in which,
said initiator mobile device sets up a shared presentation room and sends invitation information of said shared presentation room to a receiver mobile device(s) via a network or manually (S201), wherein said shared presentation room is a shared virtual presentation room;
said initiator mobile device makes the receiver mobile device(s) to join into said shared presentation room through establishing a network connection between said initiator mobile device and said receiver mobile device(s) (S202);
said initiator mobile device sends a presenting file and a playing control instruction that implements a playing control operation for said presenting file via network to said receiver mobile device(s) that has joined in said shared presentation room such that the receiver mobile device(s) receives said presenting file and said playing control instruction, and locally executes a playing control operation to said presenting file in accordance with said playing control instruction (S203); wherein, in the process of presenting, when a marking operation is initiated by the initiator mobile device, said initiator mobile device executes the marking operation to said presenting file in accordance with the marking operation and generates a corresponding marking operation instruction; and
if a marking operation is initiated by a receiver mobile device among the receiver mobile device(s) that has joined in said shared presentation room, said initiator mobile device executes a marking operation to said presenting file and generates a corresponding marking operation instruction in accordance with received marking operation information sent by the receiver mobile device, wherein said receiver mobile device sends said marking operation information to the initiator mobile device upon detection of a local marking operation initiated by the user of said receiver mobile device to said presenting file without locally displaying a result of the marking operation to said presenting file immediately; **characterized in that**
the initiator mobile device collects marking operation information of all the receivers and generates and sends a marking operation instruction to each receiver, such that each receiver mobile device receives said marking operation instruction and executes a marking operation to said presenting file,
and wherein said marking operation instruction further comprises a device identifier of the initiator mobile device or a receiver mobile device that initiates said marking operation such that each receiver mobile device executes a marking operation to said presenting file with a different color in accordance with a different device identifier when executing a marking operation to said presenting file.

2. The shared presenting method according to claim 1, in which, in the step that the initiator mobile device sends a presenting file and a playing control instruction for said presenting file to said receiver mobile device(s) that has joined in said shared presentation room,
said initiator mobile device sends a presenting file to said receiver mobile device(s) that has joined in said shared presentation room;
said initiator mobile device generates a corresponding playing control instruction in accordance with a local playing control operation to said presenting file, and sends said corresponding playing control instruction to said receiver mobile device(s) that has joined in said shared presentation room.

3. The shared presenting method according to claim 1 or 2, in which,
said initiator mobile device sends a synchronization signal to said receiver mobile device(s) that has joined in said shared presentation room such that each of said receiver mobile devices receives said synchronization signal and synchronously executes a playing control operation to said presenting file in accordance with said synchronization signal; or
said synchronization signal is a page flip signal of the presenting file of the initiator mobile device such that each receiver mobile device receives said page flip signal of the presenting file and flips said presenting file to corresponding page in accordance with said page flip signal of the presenting file.

4. A shared presenting method, said shared presenting method is adapted to a receiver mobile device(s), in which,
the receiver mobile device(s) receives invitation information of a shared presentation room sent by an initiator mobile device via a network or manually (S301), wherein said shared presentation room is a shared virtual presentation room set up by the initiator mobile device;
said receiver mobile device(s) joins in said shared presentation room through establishing a network connection between said initiator mobile device and said receiver mobile device(s) (S302);
said receiver mobile device(s) receives a presenting file and a playing control instruction that implements a playing control operation for said presenting file sent by the initiator mobile device via network and executes a playing control operation to said presenting file in accordance with said playing control instruction at the receiver mobile device(s) locally (S303), wherein, said receiver mobile device(s) receives a marking operation instruction sent by the initiator mobile device and executes a marking operation to said presenting file; wherein, when a marking operation is initiated by the initiator mobile device, said initiator mobile device executes the marking operation to said presenting file in accordance with the marking operation and generates a corresponding marking operation instruction; and
if a marking operation is initiated by a receiver mobile device among receiver mobile device(s) that has joined in said shared presentation room, the receiver mobile device sends marking operation information to said initiator mobile device without locally displaying a result of the marking operation to said presenting file immediately, and accordingly the marking operation instruction is generated by the initiator mobile device according to the received marking operation information, **characterized in that**:
the initiator mobile device collects marking operation
information of all the receivers and generates and sends a marking operation instruction to each receiver such that each receiver mobile device receives said marking operation instruction and executes a marking operation to said presenting file;
said marking operation instruction further comprises a device identifier of the initiator mobile device or a receiver mobile device that initiates said marking operation;
said receiver mobile device(s) executes a marking operation to said presenting file with a different color in accordance with a different device identifier when executing a marking operation to said presenting file.

5. The shared presenting method according to claim 4, in which,
said receiver mobile device(s) receives a synchronization signal sent by the initiator mobile device and synchronously executes a playing control operation to said presenting file in accordance with said synchronization signal; or
said synchronization signal is a page flip signal of the presenting file of the initiator mobile device, each receiver mobile device receives said page flip signal of the presenting file and flips said presenting file to corresponding page in accordance with said page flip signal of the presenting file.

6. A shared presenting system, adapted to an initiator mobile device, comprising:
a shared presentation room setting up unit (21) adapted to set up a shared presentation room and send invitation information of said shared presentation room to receiver mobile device(s) via a network or manually, wherein said shared presentation room is a shared virtual presentation room;
a shared presentation room joining unit (22) adapted to make a receiver mobile device(s) to join into said shared presentation room through establishing a network connection between said initiator mobile device and said receiver mobile device(s);
a sending unit (23) adapted to send a presenting file and a playing control instruction that implements a playing control operation for said presenting file via network to the receiver mobile device(s) that has joined in said shared presentation room such that the receiver mobile device(s) receives said presenting file and said playing control instruction, and locally executes a playing control operation to said presenting file in accordance with said playing control instruction;
said marking operation instruction generating unit is adapted to, when a marking operation is initiated by the initiator mobile device, perform the marking operation to said presenting file in accordance with the marking operation of the initiator mobile device and generate a corresponding marking operation instruction; and
said marking operation instruction generating unit is adapted to, if a marking operation is initiated by a receiver mobile device among the receiver mobile device(s) that has joined in said shared presentation room, execute a marking operation to said presenting file and generate a corresponding marking operation instruction in accordance with received marking operation information sent by the receiver mobile device, wherein said receiver mobile device sends said marking operation information to the initiator mobile device upon detection of a local marking operation initiated by the user of said receiver mobile device to said presenting file without locally displaying a result of the marking operation to said presenting file immediately; **characterized in that**
the shared presentation system further comprises a marking operation instruction generating unit and a marking operation instruction sending unit, which are adapted to collect marking operation information of all the receivers and generate and send a marking operation instruction to each receiver such that each receiver mobile device receives said marking operation instruction and executes a marking operation to said presenting file; and wherein
said marking operation instruction generating unit is further adapted to include a device identifier of the initiator mobile device or the receiver mobile device that initiates said marking operation in said marking operation instruction such that each receiver mobile device executes a marking operation to said presenting file with a different color in accordance with a different device identifier when executing a marking operation to said presenting file.

7. The shared presenting system according to claim 6, in which, said sending unit is specifically adapted to generate a corresponding playing control instruction in accordance with a local playing control operation to said presenting file by said initiator mobile device, and send a presenting file and said corresponding playing control instruction to said receiver mobile device(s) that has joined in said shared presentation room.

8. The shared presenting system according to claim 6 or 7, further comprising a synchronization signal sending unit;
said synchronization signal sending unit is adapted to send a synchronization signal to said receiver mobile device(s) that has joined in said shared presentation room such that each receiver mobile device receives said synchronization signal and synchronously executes a playing control operation to said presenting file in accordance with said synchronization signal; or
said synchronization signal is a page flip signal of the presenting file of the initiator mobile device such that each receiver mobile device receives said page flip signal of the presenting file and flips said presenting file to corresponding page in accordance with said page flip signal of the presenting file.

9. A shared presenting system, adapted to a receiver mobile device(s), comprising:
an invitation information receiving unit (31) adapted to receive invitation information of a shared presentation room sent by an initiator mobile device via a network or manually, wherein said shared presentation room is a shared virtual presentation room set up by the initiator mobile device;
a shared presentation room joining unit (32) adapted to join in said shared presentation room through establishing a network connection between said initiator mobile device and said receiver mobile device(s);
a playing control instruction executing unit (33) adapted to receive a presenting file and a playing control instruction that implements a playing control operation for said presenting file sent by the initiator mobile device via network and execute a playing control operation to said presenting file in accordance with said playing control instruction at the receiver mobile device(s) locally, wherein the shared presenting system further comprising: a marking operation information sending unit and a marking operation instruction receiving unit;
said marking operation information sending unit is adapted to, in the process of presenting, upon detecting a marking operation by a local user of the receiver mobile device, send information of said marking operation to said initiator mobile device;
said marking operation instruction receiving unit is adapted to receive a marking operation instruction sent by the initiator mobile device and execute a marking operation to said presenting file in the process of presenting; wherein,
when a marking operation is initiated by the initiator mobile device, said initiator mobile device executes the marking operation to said presenting file in accordance with the marking operation and generates a corresponding marking operation instruction; and
if a marking operation is initiated by a receiver mobile device among receiver mobile device(s) that has joined in said shared presentation room, the receiver mobile device sends marking operation information to said initiator mobile device without locally displaying a result of the marking operation to said presenting file immediately, and accordingly the marking operation instruction is generated by the initiator mobile device according to the received marking operation information, **characterized in that**
the initiator mobile device collects marking operation
information of all the receivers and generates and sends a marking operation instruction to each receiver such that each receiver mobile device receives said marking operation instruction and executes a marking operation to said presenting file; and wherein
said marking operation instruction received by said marking operation instruction receiving unit further comprises a device identifier of the initiator mobile device or the receiver mobile device(s) that initiates said marking operation;
said marking operation instruction receiving unit executes a marking operation to said presenting file with a different color in accordance with a different device identifier when executing a marking operation to said presenting file.

10. The shared presenting system according to claim 9, further comprising a synchronization signal receiving unit;
said synchronization signal receiving unit is adapted to receive a synchronization signal sent by the initiator mobile device and synchronously execute a playing control operation to said presenting file in accordance with said synchronization signal; or
said synchronization signal is a page flip signal of the presenting file of the initiator mobile device, each receiver mobile device receives said page flip signal of the presenting file and flips said presenting file to corresponding page in accordance with said page flip signal of the presenting file.

11. A mobile device, comprising a shared presenting system according to claim 6 or 9.

## Patentansprüche

1. Geteilte-Präsentation-Verfahren, wobei das geteilte-Präsentation-Verfahren an ein Initiator-Mobilgerät angepasst ist, in welchem
das Initiator-Mobilgerät einen geteilten Präsentationsraum einrichtet und Einladungsinformation des geteilten Präsentationsraums an ein Empfänger-Mobilgerät(e) über ein Netzwerk oder manuell (S201) sendet, wobei der geteilte Präsentationsraum ein geteilter virtueller Präsentationsraum ist;
wobei das Initiator-Mobilgerät das Empfänger-Mobilgerät(e) veranlasst, dem geteilten Präsentationsraum beizutreten durch Herstellen einer Netzwerkverbindung zwischen dem Initiator-Mobilgerät und dem Empfänger-Mobilgerät(en) (S202);
wobei das Initiator-Mobilgerät eine Präsentationsdatei und eine Abspielsteueranweisung, die eine Abspielsteueroperation für die Präsentationsdatei implementiert, über ein Netzwerk an das Empfänger-Mobilgerät(e) sendet, das dem geteilten Präsentationsraum beigetreten ist, so dass das Empfänger-Mobilgerät(e) die Präsentationsdatei und die Abspielsteueranweisung empfängt, und eine Abspielsteueroperation auf die Präsentationsdatei lokal ausführt gemäß der Abspielsteueranweisung (S203); wobei,
bei dem Prozess des Präsentierens,
wenn eine Markieroperation durch das Initiator-Mobilgerät initiiert ist, das Initiator-Mobilgerät die Markieroperation auf die Präsentationsdatei ausführt gemäß der Markieroperation und eine entsprechende Markieroperationsanweisung erzeugt; und
wenn eine Markieroperation durch ein Empfänger-Mobilgerät unter den Empfänger-Mobilgerät(en), das dem geteilten Präsentationsraum beigetreten ist, initiiert ist, das Initiator-Mobilgerät eine Markieroperation auf die Präsentationsdatei ausführt und eine entsprechende Markieroperationsanweisung erzeugt gemäß empfangener Markieroperationsinformationen, die durch das Empfänger-Mobilgerät gesendet wurden, wobei das Empfänger-Mobilgerät Markieroperationsinformationen an das Initiator-Mobilgerät sendet auf Detektion einer lokalen Markieroperation hin, die durch den Nutzer des Empfänger-Mobilgeräts initiiert wurde, auf die Präsentationsdatei ohne unmittelbares lokales Anzeigen eines Ergebnisses der Markieroperation auf die Präsentationsdatei, **dadurch gekennzeichnet, dass**
das Initiator-Mobilgerät Markieroperationsinformationen von allen der Empfänger sammelt und eine Markieroperationsanweisung erzeugt und an jeden Empfänger sendet, so dass jedes Empfänger-Mobilgerät die Markieroperationsanweisung empfängt und eine Markieroperation auf die Präsentationsdatei ausführt,
und wobei
die Markieroperationsanweisung ferner einen Gerät-Identifizierer des Initiator-Mobilgeräts oder eines Empfänger-Mobilgeräts umfasst, das die Markieroperation initiiert, so dass jedes Empfänger-Mobilgerät eine Markieroperation auf die Präsentationsdatei mit einer anderen Farbe in Entsprechung mit einem anderen Gerät-Identifizierer bei Ausführung einer Markieroperation auf die Präsentationsdatei ausführt.

2. Geteilte-Präsentation-Verfahren nach Anspruch 1, in welchem, in dem Schritt, wo das Initiator-Mobilgerät eine Präsentationsdatei und eine Abspielsteueranweisung für die Präsentationsdatei an das Empfänger-Mobilgerät(e) sendet, das dem geteilten Präsentationsraum beigetreten ist,
das Initiator-Mobilgerät eine Präsentationsdatei an das Empfänger-Mobilgerät(e) sendet, das dem geteilten Präsentationsraum beigetreten ist,
wobei das Initiator-Mobilgerät eine entsprechende Abspielsteueranweisung erzeugt gemäß einer lokalen Abspielsteueroperation auf die Präsentationsdatei und die entsprechende Abspielsteueranweisung an das Empfänger-Mobilgerät(e) sendet, das dem geteilten Präsentationsraum beigetreten ist.

3. Geteilte-Präsentation-Verfahren nach Anspruch 1 oder 2, in welchem
das Initiator-Mobilgerät ein Synchronisationssignal an das Empfänger-Mobilgerät(e) sendet, das dem geteilten Präsentationsraum beigetreten ist, so dass jedes der Empfänger-Mobilgeräte das Synchronisationssignal empfängt und eine Abspielsteueroperation auf die Präsentationsdatei synchron ausführt gemäß dem Synchronisationssignal; oder
das Synchronisationssignal ein Seitenumblättersignal der Präsentationsdatei des Initiator-Mobilgeräts ist, so dass jedes Empfänger-Mobilgerät das Seitenumblättersignal der Präsentationsdatei empfängt und die Präsentationsdatei auf entsprechende Seite umblättert gemäß dem Seitenumblättersignal der Präsentationsdatei.

4. Geteilte-Präsentation-Verfahren, wobei das geteilte-Präsentation-Verfahren an ein Empfänger-Mobilgerät(e) angepasst ist, in welchem
das Empfänger-Mobilgerät(e) Einladungsinformationen eines geteilten Präsentationsraums, die von einem Initiator-Mobilgerät über ein Netzwerk oder manuell (S301) gesendet werden, empfängt, wobei der geteilte Präsentationsraum ein geteilter virtueller Präsentationsraum ist, der durch das Initiator-Mobilgerät eingerichtet ist;
das Empfänger-Mobilgerät(e) dem geteilten Präsentationsraum beitritt durch Herstellen einer Netzwerkverbindung zwischen dem Initiator-Mobilgerät und dem Empfänger-Mobilgerät(en) (S302);
das Empfänger-Mobilgerät(e) eine Präsentationsdatei und eine Abspielsteueranweisung, die eine Abspielsteueroperation für die Präsentationsdatei implementiert, die durch das Initiator-Mobilgerät über Netzwerk gesendet wurden, empfängt und eine Abspielsteueroperation auf die Präsentationsdatei gemäß der Abspielsteueranweisung am Empfänger-Mobilgerät lokal ausführt (S303), wobei
das Empfänger-Mobilgerät(e) eine durch das Initiator-Mobilgerät gesendete Markieroperationsanweisung empfängt und eine Markieroperation auf die Präsentationsdatei ausführt;
wobei, wenn eine Markieroperation durch das Initiator-Mobilgerät initiiert ist, das Initiator-Mobilgerät die Markieroperation auf die Präsentationsdatei ausführt gemäß der Markieroperation und eine entsprechende Markieroperationsanweisung erzeugt; und
wenn eine Markieroperation durch ein Empfänger-Mobilgerät unter Empfänger-Mobilgerät(en), das dem geteilten Präsentationsraum beigetreten ist, initiiert wird, das Empfänger-Mobilgerät Markieroperationsinformationen an das Initiator-Mobilgerät sendet ohne unmittelbares lokales Anzeigen eines Ergebnisses der Markieroperation auf die Präsentationsdatei, und die Markieroperationsanweisung dementsprechend durch das Initiator-Mobilgerät gemäß den empfangenen Markieroperationsinformationen erzeugt wird, **dadurch gekennzeichnet, dass**:
das Initiator-Mobilgerät Markieroperationsinformationen von allen der Empfänger sammelt und eine Markieroperationsanweisung erzeugt und an jeden Empfänger sendet, so dass jedes Empfänger-Mobilgerät die Markieroperationsanweisung empfängt und eine Markieroperation auf die Präsentationsdatei ausführt;
die Markieroperationsanweisung ferner einen Gerät-Identifizierer des Initiator-Mobilgeräts oder eines Empfänger-Mobilgeräts, das die Markieroperation initiiert, umfasst;
das Empfänger-Mobilgerät(e) eine Markieroperation auf die Präsentationsdatei mit einer anderen Farbe in Entsprechung mit einem anderen Gerät-Identifizierer ausführt bei Ausführung einer Markieroperation auf die Präsentationsdatei.

5. Geteilte-Präsentation-Verfahren nach Anspruch 4, in welchem das Empfänger-Mobilgerät(e) ein Synchronisationssignal empfängt, das durch das Initiator-Mobilgerät gesendet wurde, und eine Abspielsteueroperation auf die Präsentationsdatei synchron ausführt gemäß dem Synchronisationssignal; oder
das Synchronisationssignal ein Seitenumblättersignal der Präsentationsdatei des Initiator-Mobilgeräts ist, wobei jedes Empfänger-Mobilgerät das Seitenumblättersignal der Präsentationsdatei empfängt und die Präsentationsdatei auf die entsprechende Seite umblättert gemäß dem Seitenumblättersignal der Präsentationsdatei.

6. Geteiltes Präsentationssystem, das an ein Initiator-Mobilgerät angepasst ist, umfassend:
eine geteilter-Präsentationsraum-Einrichtungseinheit (21), die ausgelegt ist, um einen geteilten Präsentationsraum einzurichten und Einladungsinformationen des geteilten Präsentationsraums an Empfänger-Mobilgerät(e) über ein Netzwerk oder manuell zu senden, wobei der geteilte Präsentationsraum ein geteilter virtueller Präsentationsraum ist;
eine geteilter-Präsentationsraum-Beitrittseinheit (22), die ausgelegt ist, um ein Empfänger-Mobilgerät(e) zu veranlassen, dem geteilten Präsentationsraum beizutreten durch Herstellen einer Netzwerkverbindung zwischen dem Initiator-Mobilgerät und dem Empfänger-Mobilgerät(en);
eine Sendeeinheit (23), die ausgelegt ist, um eine Präsentationsdatei und eine Abspielsteueranweisung, die eine Abspielsteueroperation für die Präsentationsdatei implementiert, über ein Netzwerk an das Empfänger-Mobilgerät(e) zu senden, das dem geteilten Präsentationsraum beigetreten ist, so dass das Empfänger-Mobilgerät(e) die Präsentationsdatei und die Abspielsteueranweisung empfängt und eine Abspielsteueroperation auf die Präsentationsdatei lokal ausführt gemäß der Abspielsteueranweisung;
wobei die Markieroperationsanweisungserzeugungseinheit ausgelegt ist, um, wenn eine Markieroperation durch das Initiator-Mobilgerät initiiert wird, die Markieroperation auf die Präsentationsdatei durchzuführen gemäß der Markieroperation des Initiator-Mobilgeräts und eine entsprechende Markieroperationsanweisung zu erzeugen; und
die Markieroperationsanweisungserzeugungseinheit ausgelegt ist, um, wenn eine Markieroperation durch ein Empfänger-Mobilgerät unter den Empfänger-Mobilgerät(en), das dem geteilten Präsentationsraum beigetreten ist, initiiert ist, eine Markieroperation auf die Präsentationsdatei auszuführen und eine entsprechende Markieroperationsanweisung zu erzeugen gemäß empfangenen Markieroperationsinformationen, die durch das Empfänger-Mobilgerät gesendet wurden, wobei das Empfänger-Mobilgerät die Markieroperationsinformationen an das Initiator-Mobilgerät sendet auf Detektion einer lokalen Markieroperation hin, die durch den Nutzer des Empfänger-Mobilgeräts initiiert ist, auf die Präsentationsdatei ohne unmittelbares lokales Anzeigen eines Ergebnisses der Markieroperation auf die Präsentationsdatei;
**dadurch gekennzeichnet, dass**
das geteilte Präsentationssystem ferner eine Markieroperationsanweisungserzeugungseinheit und eine Markieroperationsanweisungssendeeinheit umfasst, welche ausgelegt sind, um Markieroperationsinformationen von allen der Empfänger zu sammeln und eine Markieroperationsanweisung zu erzeugen und an jeden Empfänger zu senden, so dass jedes Empfänger-Mobilgerät die Markieroperationsanweisung empfängt und eine Markieroperation auf die Präsentationsdatei ausführt; und wobei
die Markieroperationsanweisungserzeugungseinheit ferner ausgelegt ist, um einen Gerät-Identifizierer des Initiator-Mobilgeräts oder des Empfänger-Mobilgeräts, das die Markieroperation in der Markieroperationsanweisung initiiert, zu umfassen, so dass jedes Empfänger-Mobilgerät eine Markieroperation auf die Präsentationsdatei mit einer anderen Farbe in Entsprechung mit einem anderen Gerät-Identifizierer ausführt bei Ausführung einer Markieroperation auf die Präsentationsdatei.

7. Geteiltes Präsentationssystem nach Anspruch 6, in welchem die Sendeeinheit insbesondere ausgelegt ist, um eine entsprechende Abspielsteueranweisung zu erzeugen gemäß einer lokalen Abspielsteueroperation auf die Präsentationsdatei durch das Initiator-Mobilgerät, und eine Präsentationsdatei und die entsprechende Abspielsteueranweisung an das Empfänger-Mobilgerät(e) zu senden, das dem geteilten Präsentationsraum beigetreten ist.

8. Geteiltes Präsentationssystem nach Anspruch 6 oder 7, ferner umfassend eine Synchronisationssignalsendeeinheit,
wobei die Synchronisationssignalsendeeinheit ausgelegt ist, um ein Synchronisationssignal an das Empfänger-Mobilgerät(e) zu senden, das dem geteilten Präsentationsraum beigetreten ist, so dass jedes Empfänger-Mobilgerät das Synchronisationssignal empfängt und eine Abspielsteueroperation auf die Präsentationsdatei synchron ausführt gemäß dem Synchronisationssignal; oder
das Synchronisationssignal ein Seitenumblättersignal der Präsentationsdatei des Initiator-Mobilgeräts ist, so dass jedes Empfänger-Mobilgerät das Seitenumblättersignal der Präsentationsdatei empfängt und die Präsentationsdatei auf die entsprechende Seite umblättert gemäß dem Seitenumblättersignal der Präsentationsdatei.

9. Geteiltes Präsentationssystem, das für ein Empfänger-Mobilgerät(e) ausgelegt ist, umfassend:
eine Einladungsinformationsempfangseinheit (31), die ausgelegt ist, um Einladungsinformationen eines geteilten Präsentationsraums zu empfangen, die durch ein Initiator-Mobilgerät über ein Netzwerk manuell gesendet wurden, wobei der geteilte Präsentationsraum ein geteilter virtueller Präsentationsraum ist, der durch das Initiator-Mobilgerät eingerichtet wurde;
eine geteilter-Präsentationsraum-Beitrittseinheit (32), die ausgelegt ist, dem geteilten Präsentationsraum beizutreten durch Herstellen einer Netzwerkverbindung zwischen dem Initiator-Mobilgerät und dem Empfänger-Mobilgerät(en);
eine Abspielsteueranweisungsausführungseinheit (33), die ausgelegt ist, um eine Präsentationsdatei und eine Abspielsteueranweisung, die eine Abspielsteueroperation für die durch das Initiator-Mobilgerät über Netzwerk gesendete Präsentationsdatei implementiert, zu empfangen und eine Abspielsteueroperation auf die Präsentationdatei gemäß der Abspielsteueranweisung am Empfänger-Mobilgerät(en) lokal auszuführen, wobei
das geteilte Präsentationssystem ferner umfasst: eine Markieroperationsinformationssendeeinheit und eine Markieroperationsanweisungsempfangseinheit;
wobei die Markieroperationsinformationssendeeinheit ausgelegt ist, um im Prozess des Präsentierens, auf Detektieren einer Markieroperation durch einen lokalen Nutzer des Empfänger-Mobilgeräts hin, Informationen der Markieroperation an das Initiator-Mobilgerät zu senden;
wobei die Markieroperationsanweisungsempfangseinheit ausgelegt ist, um eine durch das Initiator-Mobilgerät gesendet Markieroperationsanweisung zu empfangen und eine Markieroperation auf die Präsentationsdatei im Prozess des Präsentierens auszuführen; wobei,
wenn eine Markieroperation durch das Initiator-Mobilgerät initiiert wird, das Initiator-Mobilgerät die Markieroperation auf die Präsentationsdatei ausführt gemäß der Markieroperation und eine entsprechende Markieroperationsanweisung erzeugt; und
wenn eine Markieroperation durch ein Empfänger-Mobilgerät unter Empfänger-Mobilgerät(en) initiiert wird, das dem geteilten Präsentationsraum beigetreten ist, das Empfänger-Mobilgerät Markieroperationsinformationen an das Initiator-Mobilgerät sendet ohne unmittelbares lokales Anzeigen eines Ergebnisses der Markieroperation auf die Präsentationsdatei, und dementsprechend die Markieroperationsanweisung durch das Initiator-Mobilgerät erzeugt wird gemäß den empfangenen Markieroperationsinformationen, **dadurch gekennzeichnet, dass**
das Initiator-Mobilgerät Markieroperationsinformationen von allen der Empfänger sammelt und eine Markieroperationsanweisung erzeugt und an jeden Empfänger sendet, so dass jedes Empfänger-Mobilgerät die Markieroperationsanweisung empfängt und eine Markieroperation auf die Präsentationsdatei ausführt; und wobei
die durch die Markieroperationsanweisungsempfangseinheit empfangene Markieroperationsanweisung ferner einen Gerät-Identifizierer des Initiator-Mobilgeräts oder des Empfänger-Mobilgeräts(en), das die Markieroperation initiiert, umfasst;
wobei die Markieroperationsanweisungsempfangseinheit eine Markieroperation auf die Präsentationsdatei mit einer anderen Farbe gemäß einem anderen Gerät-Identifizierer ausführt bei Ausführung einer Markieroperation auf die Präsentationsdatei.

10. Geteiltes Präsentationssystem nach Anspruch 9, ferner umfassend eine Synchronisationssignalempfangseinheit;
wobei die Synchronisationssignalempfangseinheit ausgelegt ist, um ein durch das Initiator-Mobilgerät gesendetes Synchronisationssignal zu empfangen und eine Abspielsteueroperation auf die Präsentationsdatei synchron auszuführen gemäß dem Synchronisationssignal; oder
das Synchronisationssignal ein Seitenumblättersignal der Präsentationsdatei des Initiator-Mobilgeräts ist, wobei jedes Empfänger-Mobilgerät das Seitenumblättersignal der Präsentationsdatei empfängt und die Präsentationsdatei auf die entsprechende Seite umblättert gemäß dem Seitenumblättersignal der Präsentationsdatei.

11. Mobilgerät, umfassend ein geteiltes Präsentationssystem nach Anspruch 6 oder 9.

## Revendications

1. Procédé de présentation partagée, ledit procédé de présentation partagée étant adapté à un dispositif mobile initiateur, dans lequel :
ledit dispositif mobile initiateur met en place une salle de présentation partagée, et envoie des informations d'invitation de ladite salle de présentation partagée à un ou à des dispositifs mobiles récepteurs par l'intermédiaire d'un réseau ou de manière manuelle (S201), dans lequel ladite salle de présentation partagée est une salle de présentation partagée virtuelle ;
ledit dispositif mobile initiateur fait rejoindre ladite salle de présentation partagée par le ou les dispositifs mobiles récepteurs, en établissant une connexion réseau entre ledit dispositif mobile initiateur et ledit ou lesdits dispositifs mobiles récepteurs (S202) ;
ledit dispositif mobile initiateur envoie un fichier de présentation et une instruction de commande de lecture qui met en oeuvre une opération de commande de lecture dudit fichier de présentation par l'intermédiaire du réseau, audit ou auxdits dispositifs mobiles récepteurs qui ont rejoint ladite salle de présentation partagée, de telle sorte que le ou les dispositifs mobiles récepteurs reçoivent ledit fichier de présentation et ladite instruction de commande de lecture, et exécutent de manière locale une opération de commande de lecture dudit fichier de présentation selon ladite instruction de commande de lecture (S203) ;
dans lequel :
dans le processus de présentation :
quand une opération de marquage est initiée par le dispositif mobile initiateur, ledit dispositif mobile initiateur exécute l'opération de marquage dudit fichier de présentation selon l'opération de marquage, et génère une instruction d'opération de marquage correspondante ; et
si une opération de marquage est initiée par un dispositif mobile récepteur parmi le ou les dispositifs mobiles récepteurs qui ont rejoint ladite salle de présentation partagée, ledit dispositif mobile initiateur exécute une opération de marquage dudit fichier de présentation, et génère une instruction d'opération de marquage correspondante selon les informations d'opération de marquage reçues envoyées par le dispositif mobile récepteur, dans lequel ledit dispositif mobile récepteur envoie lesdites informations d'opération de marquage au dispositif mobile initiateur lors de la détection d'une opération de marquage locale initiée par l'utilisateur dudit dispositif mobile récepteur dudit fichier de présentation sans afficher de manière locale un résultat de l'opération de marquage dudit fichier de présentation de manière immédiate ;
**caractérisé en ce que** :
le dispositif mobile initiateur collecte des informations d'opération de marquage de tous les récepteurs, et génère et envoie une instruction d'opération de marquage à chaque récepteur, de telle sorte que chaque dispositif mobile récepteur reçoive ladite instruction d'opération de marquage, et exécute une opération de marquage dudit fichier de présentation ;
et dans lequel :
ladite instruction d'opération de marquage comprend en outre un identifiant de dispositif du dispositif mobile initiateur ou d'un dispositif mobile récepteur qui initie ladite opération de marquage, de telle sorte que chaque dispositif mobile récepteur exécute une opération de marquage dudit fichier de présentation avec une couleur différente selon un identifiant de dispositif différent lors de l'exécution d'une opération de marquage dudit fichier de présentation.

2. Procédé de présentation partagée selon la revendication 1, dans lequel, dans l'étape où le dispositif mobile initiateur envoie un fichier de présentation et une instruction de commande de lecture dudit fichier de présentation, audit ou auxdits dispositifs mobiles récepteurs qui ont rejoint ladite salle de présentation partagée,
ledit dispositif mobile initiateur envoie un fichier de présentation audit ou auxdits dispositifs mobiles récepteurs qui ont rejoint ladite salle de présentation partagée ;
ledit dispositif mobile initiateur génère une instruction de commande de lecture correspondante selon une opération de commande de lecture locale dudit fichier de présentation, et envoie ladite instruction de commande de lecture correspondante audit ou auxdits dispositifs mobiles récepteurs qui ont rejoint ladite salle de présentation partagée.

3. Procédé de présentation partagée selon la revendication 1 ou la revendication 2, dans lequel :
ledit dispositif mobile initiateur envoie un signal de synchronisation audit ou auxdits dispositifs mobiles récepteurs qui ont rejoint ladite salle de présentation partagée, de telle sorte que chacun desdits dispositifs mobiles récepteurs reçoive ledit signal de synchronisation, et exécute de manière synchrone une opération de commande de lecture dudit fichier de présentation selon ledit signal de synchronisation ; ou
ledit signal de synchronisation est un signal de feuilletage du fichier de présentation du dispositif mobile initiateur de telle sorte que chaque dispositif mobile récepteur reçoive ledit signal de feuilletage du fichier de présentation, et feuillette ledit fichier de présentation à la page correspondante selon ledit signal de feuilletage du fichier de présentation.

4. Procédé de présentation partagée, ledit procédé de présentation partagée étant adapté à un ou à des dispositifs mobiles récepteurs, dans lequel :
le ou les dispositifs mobiles récepteurs reçoivent des informations d'invitation d'une salle de présentation partagée, envoyées par un dispositif mobile initiateur par l'intermédiaire d'un réseau ou de manière manuelle (S301), dans lequel ladite salle de présentation partagée est une salle de présentation partagée virtuelle mise en place par le dispositif mobile initiateur ;
ledit ou lesdits dispositifs mobiles récepteurs rejoignent ladite salle pièce de présentation partagée en établissant une connexion réseau entre ledit dispositif mobile initiateur et ledit ou lesdits dispositifs mobiles récepteurs (S302) ;
ledit ou lesdits dispositifs mobiles récepteurs reçoivent un fichier de présentation et une instruction de commande de lecture qui met en oeuvre une opération de commande de lecture dudit fichier de présentation envoyée par le dispositif mobile initiateur par l'intermédiaire du réseau, et exécutent une opération de commande de lecture dudit fichier de présentation selon ladite instruction de commande de lecture au niveau des dispositifs mobiles récepteurs, de manière locale (S303) ;
dans lequel :
ledit ou lesdits dispositifs mobiles récepteurs reçoivent une instruction d'opération de marquage envoyée par le dispositif mobile initiateur, et exécutent une opération de marquage dudit fichier de présentation ;
dans lequel :
quand une opération de marquage est initiée par le dispositif mobile initiateur, ledit dispositif mobile initiateur exécute l'opération de marquage dudit fichier de présentation selon l'opération de marquage, et génère d'une instruction d'opération de marquage correspondante ; et
si une opération de marquage est initiée par un dispositif mobile récepteur parmi le ou les dispositifs mobiles récepteurs qui ont rejoint ladite salle de présentation partagée, le dispositif mobile récepteur envoie des informations d'opération de marquage audit dispositif mobile initiateur sans afficher de manière locale un résultat de l'opération de marquage dudit fichier de présentation de manière immédiate, et par conséquent l'instruction d'opération de marquage est générée par le dispositif mobile initiateur selon les informations d'opération de marquage reçues ;
**caractérisé en ce que** :
le dispositif mobile initiateur collecte des informations d'opération de marquage de tous les récepteurs, et génère et envoie une instruction d'opération de marquage à chaque récepteur, de telle sorte que chaque dispositif mobile récepteur reçoive ladite instruction d'opération de marquage, et exécute une opération de marquage dudit fichier de présentation ;
ladite instruction d'opération de marquage comprend en outre un identifiant de dispositif du dispositif mobile initiateur ou d'un dispositif mobile récepteur qui initie ladite opération de marquage ;
ledit ou lesdits dispositifs mobiles récepteurs exécutent une opération de marquage dudit fichier de présentation avec une couleur différente selon un identifiant de dispositif différent lors de l'exécution d'une opération de marquage dudit fichier de présentation.

5. Procédé de présentation partagée selon la revendication 4, dans lequel :
ledit ou lesdits dispositifs mobiles récepteurs reçoivent un signal de synchronisation envoyé par le dispositif mobile initiateur, et exécutent de manière synchrone une opération de commande de lecture dudit fichier de présentation selon ledit signal de synchronisation ; ou
ledit signal de synchronisation est un signal de feuilletage du fichier de présentation du dispositif mobile initiateur, chaque dispositif mobile récepteur reçoit ledit signal de feuilletage du fichier de présentation, et feuillette ledit fichier de présentation à la page correspondante selon ledit signal de feuilletage du fichier de présentation.

6. Système de présentation partagée, adapté à un dispositif mobile initiateur, comprenant :
une unité de mise en place d'une salle de présentation partagée (21) adaptée pour mettre en place une salle de présentation partagée, et pour envoyer des informations d'invitation de ladite salle de présentation partagée à un ou à des dispositifs mobiles récepteurs par l'intermédiaire d'un réseau ou de manière manuelle, dans lequel ladite salle de présentation partagée est une salle de présentation partagée virtuelle ;
une unité invitant à rejoindre la salle de présentation partagée (22) adaptée pour faire rejoindre par le ou les dispositifs mobiles récepteurs, ladite salle de présentation partagée en établissant une connexion réseau entre ledit dispositif mobile initiateur et ledit ou lesdits dispositifs mobiles récepteurs ;
une unité d'envoi (23) adaptée pour envoyer un fichier de présentation et une instruction de commande de lecture qui met en oeuvre une opération de commande de lecture dudit fichier de présentation par l'intermédiaire du réseau, au ou aux dispositifs mobiles récepteurs qui ont rejoint ladite salle de présentation partagée, de telle sorte que le ou les dispositifs mobiles récepteurs reçoivent ledit fichier de présentation et ladite instruction de commande de lecture, et exécutent de manière locale une opération de commande de lecture dudit fichier de présentation selon ladite instruction de commande de lecture ;
ladite unité de génération d'instruction d'opération de marquage est adaptée pour exécuter, quand une opération de marquage est initiée par le dispositif mobile initiateur, l'opération de marquage dudit fichier de présentation selon l'opération de marquage du dispositif mobile initiateur, et pour initier d'une instruction d'opération de marquage correspondante ; et
ladite unité de génération d'instruction d'opération de marquage est adaptée pour exécuter, si une opération de marquage est initiée par un dispositif mobile récepteur parmi le ou les dispositifs mobiles récepteurs qui ont rejoint ladite salle de présentation partagée, une opération de marquage dudit fichier de présentation, et pour générer une instruction d'opération de marquage correspondante selon les informations d'opération de marquage de repérage reçues envoyées par le dispositif mobile récepteur, dans lequel ledit dispositif mobile récepteur envoie lesdites informations d'opération de marquage au dispositif mobile initiateur lors de la détection d'une opération de marquage locale initiée par l'utilisateur dudit dispositif mobile récepteur dudit fichier de présentation sans afficher de manière locale un résultat de l'opération de marquage dudit fichier de présentation, de manière immédiate ;
**caractérisé en ce que** :
le système de présentation partagée comprend en outre une unité de génération d'instruction d'opération de marquage et une unité d'envoi d'instruction d'opération de marquage, qui sont adaptées pour collecter des informations d'opération de marquage de tous les récepteurs, et pour générer et envoyer une instruction d'opération de marquage à chaque récepteur, de telle sorte que chaque dispositif mobile récepteur reçoive ladite instruction d'opération de marquage, et exécute une opération de marquage dudit fichier de présentation ; et dans lequel :
ladite unité de génération d'instruction d'opération de marquage est adaptée en outre pour inclure un identifiant de dispositif du dispositif mobile initiateur ou du dispositif mobile de récepteur qui initie ladite opération de marquage dans ladite instruction d'opération de marquage, de telle sorte que chaque dispositif mobile récepteur exécute une opération de marquage dudit fichier de présentation avec une couleur différente selon un identifiant de dispositif différent lors de l'exécution d'une opération de marquage dudit fichier de présentation.

7. Système de présentation partagée selon la revendication 6, dans lequel ladite unité d'envoi est adaptée de manière spécifique pour générer une instruction de commande de lecture correspondante selon une opération de commande de lecture locale dudit fichier de présentation par ledit dispositif mobile initiateur, et pour envoyer un fichier de présentation et ladite instruction de commande de lecture correspondante audit ou auxdits dispositifs mobiles récepteurs qui ont rejoint ladite salle de présentation partagée.

8. Système de présentation partagée selon la revendication 6 ou la revendication 7, comprenant en outre une unité d'envoi de signal de synchronisation ;
ladite unité d'envoi de signal de synchronisation est adaptée pour envoyer un signal de synchronisation audit ou auxdits dispositifs mobiles récepteurs qui ont rejoint ladite salle de présentation partagée, de telle sorte que chaque dispositif mobile récepteur reçoive ledit signal de synchronisation, et exécute de manière synchrone une opération de commande de lecture dudit fichier de présentation selon ledit signal de synchronisation ; ou
ledit signal de synchronisation est un signal de feuilletage du fichier de présentation du dispositif mobile initiateur de telle sorte que chaque dispositif mobile récepteur reçoive ledit signal de feuilletage du fichier de présentation, et feuillette ledit fichier de présentation à la page correspondante selon ledit signal de feuilletage du fichier de présentation.

9. Système de présentation partagée, adapté à un ou à des dispositifs mobiles récepteurs, comprenant :
une unité de réception d'informations d'invitation (31) adaptée pour recevoir des informations d'invitation d'une salle de présentation partagée, envoyées par un dispositif mobile initiateur par l'intermédiaire d'un réseau ou de manière manuelle, dans lequel ladite salle de présentation partagée est une salle de présentation partagée virtuelle mise en place par le dispositif mobile initiateur ;
une unité invitant à rejoindre la salle de présentation partagée (32) adaptée pour faire rejoindre ladite salle de présentation partagée en établissant une connexion réseau entre ledit dispositif mobile initiateur et ledit ou lesdits dispositifs mobiles récepteurs ;
une unité d'exécution d'instruction de commande de lecture (33) adaptée pour recevoir un fichier de présentation et une instruction de commande de lecture qui met en oeuvre une opération de commande de lecture dudit fichier de présentation envoyée par le dispositif mobile initiateur par l'intermédiaire du réseau, et pour exécuter une opération de commande de lecture dudit fichier de présentation selon ladite instruction de commande de lecture au niveau du ou des dispositifs mobiles récepteurs, de manière locale, dans lequel :
le système de présentation partagée comprenant en outre :
une unité d'envoi d'informations d'opération de marquage, et une unité de réception d'instruction d'opération de marquage ;
ladite unité d'envoi d'informations d'opération de marquage est adaptée pour envoyer, dans le processus de présentation, lors de la détection d'une opération de marquage par un utilisateur local du dispositif mobile récepteur, des informations de ladite opération de marquage, audit dispositif mobile initiateur ;
ladite unité de réception d'instruction d'opération de marquage est adaptée pour recevoir une instruction d'opération de marquage envoyée par le dispositif mobile initiateur, et pour exécuter une opération de marquage dudit fichier de présentation dans le processus de présentation ; dans lequel :
quand une opération de marquage est initiée par le dispositif mobile initiateur, ledit dispositif mobile initiateur exécute l'opération de marquage dudit fichier de présentation selon l'opération de marquage, et génère d'une instruction d'opération de marquage correspondante ; et
si une opération de marquage est initiée par un dispositif mobile récepteur parmi le ou les dispositifs mobiles récepteurs qui ont rejoint ladite salle de présentation partagée, le dispositif mobile récepteur envoie des informations d'opération de marquage audit dispositif mobile initiateur sans afficher de manière locale un résultat de l'opération de marquage dudit fichier de présentation de manière immédiate, et par conséquent l'instruction d'opération de marquage est générée par le dispositif mobile initiateur selon les informations d'opération de marquage reçues ;
**caractérisé en ce que** :
le dispositif mobile initiateur collecte des informations d'opération de marquage de tous les récepteurs, et génère et envoie une instruction d'opération de marquage à chaque récepteur, de telle sorte que chaque dispositif mobile récepteur reçoive ladite instruction d'opération de marquage, et exécute une opération de marquage dudit fichier de présentation ; et dans lequel :
ladite instruction d'opération de marquage reçue par ladite unité de réception d'instruction d'opération de marquage, comprend en outre un identifiant de dispositif du dispositif mobile initiateur ou du ou des dispositifs mobiles récepteurs qui initient ladite opération de marquage ;
ladite unité de réception d'instruction d'opération de marquage exécute une opération de marquage dudit fichier de présentation avec une couleur différente selon un identifiant de dispositif différent lors de l'exécution d'une opération de marquage dudit fichier de présentation.

10. Système de présentation partagée selon la revendication 9, comprenant en outre une unité de réception de signal de synchronisation ;
ladite unité de réception de signal de synchronisation est adaptée pour recevoir un signal de synchronisation envoyé par le dispositif mobile initiateur, et pour exécuter de manière synchrone une opération de commande de lecture dudit fichier de présentation selon ledit signal de synchronisation ; ou
ledit signal de synchronisation est un signal de feuilletage du fichier de présentation du dispositif mobile initiateur, chaque dispositif mobile récepteur reçoit ledit signal de feuilletage du fichier de présentation, et feuillette ledit fichier de présentation à la page correspondante selon ledit signal de feuilletage du fichier de présentation.

11. Dispositif mobile, comprenant un système de présentation partagée selon la revendication 6 ou la revendication 9.
